(19) Europäisches Patentamt

European Patent Office

Office européen des brevets

(11) **EP 0 887 638 B1**

(12) **EUROPEAN PATENT SPECIFICATION**

(45) Date of publication and mention
of the grant of the patent:
**07.05.2003   Bulletin 2003/19**

(51) Int Cl.[7]: **G01N 21/88**, G01N 21/35

(21) Application number: **97304413.4**

(22) Date of filing: **24.06.1997**

(54) **Apparatus and method for verifying product integrity**

Vorrichtung und Verfahren zum Verifizieren der Integrität eines Produkts

Dispositif et procédé permettant de vérifier la pureté d'un produit

(84) Designated Contracting States:
**AT BE CH DE DK ES FR GB IE IT LI NL SE**

(43) Date of publication of application:
**30.12.1998   Bulletin 1998/53**

(73) Proprietor: **Uhlmann VisioTec GmbH**
**88471 Laupheim (DE)**

(72) Inventors:
• **Ridley, Mark**
**Cherry Hinton, Cambridge CB1 4PD (GB)**
• **Cumpstey, David Edward**
**Little Eversden, Cambridgeshire CB3 7HB (GB)**

(74) Representative: **Strobel, Wolfgang, Dipl.-Ing.**
**Kroher . Strobel**
**Rechts- und Patentanwälte**
**Bavariaring 20**
**80336 München (DE)**

(56) References cited:
DE-A- 4 340 795         DE-A- 4 441 686
US-A- 4 143 770         US-A- 5 440 127

• SYKE G AND BURNS C: "CLOSED-CIRCUIT
TELEVISION FOR THE INSPECTION OF
FAST-MOVING SURFACES" JOURNAL OF THE
INSTITUTION OF ELECTRICAL ENGINEERS, vol.
9, July 1963, pages 296-299, XP002047402
• PATENT ABSTRACTS OF JAPAN vol. 097, no.
008, 29 August 1997 & JP 09 089768 A
(MITSUBISHI HEAVY IND LTD), 4 April 1997,

## Description

This invention relates to systems for verifying the integrity of products such as chemical tablets. Because of the very nature of chemical tablets, particularly those of the medical type, a high degree of quality control is required in their manufacture. It is not acceptable to have even a small percentage of such a product fall outside strict quality requirements, as this could have serious consequences for an end-user of the product.

To ensure the quality of the product being filled on a production line it is a requirement that every tablet/capsule is verified. In known filling lines this verification is carried out using a vision system to check that the size, shape and colour of each tablet are within preset limits. Only tablets that pass these quality checks are used to fill bottles.

However, such systems still have a number of problems, for example, on clinical packaging lines tablets and capsules of different types and concentrations (including placebos) are often intentionally or coincidentally visually identical. Therefore, such visual verification of the tablets/capsules is not sufficient to distinguish different product types and levels of active component.

Therefore, systems have been created which use infra-red radiation for the detection of the composition of the material of the tablets. US-4,143,770 discloses a system and a method for verifying the composition of a moving pharmaceutical capsule. The system comprises an apparatus comprising a source of near infra-red radiation for illuminating the capsule means for receiving data relating to the location of the capsule and using said data to receive radiation from the source reflected from the located capsule, a spectrometer for receiving the radiation from the radiation receiving means and providing an output corresponding to the intensity of the received radiation at a number of different wavelengths, and means for determining whether or not the capsule is within predetermined integrity criteria on the basis of the spectrometer output. The location data are obtained by means of an encoder associated with a conveyor transporting the capsules.

It is the object of the present invention to provide such a system with means for obtaining improved location and position data.

The system according to the invention is characterised in that it comprises a vision system being located upstream from the apparatus and providing product location data. Thus, it is not only possible to pre-examine the product for size, shape and colour, but also to calculate the exact position and possible oblique arrangement of each single tablet for consideration in the near infra-red measurement.

The product may be a chemical product, for example, a tablet or capsule.

The radiation receiving means may employ a galvo-mirror, the position of which is altered dependent upon received location data in order to target a located product.

The spectrometer may comprise means for splitting received radiation in to a number of wavelengths for detection by a photo-diode array.

The illuminating source may comprise one or more lamps. The apparatus may be arranged to verify the quality of one or more streams of product at the same time, using only one spectrometer.

In a preferred embodiment, two lamps are provided for each stream of product to be tested, each lamp being directed at the stream at an angle of approximately 45°. Each stream is usually a single line of product.

The system may be controlled by a control PC via a dedicated interface card.

The apparatus may further comprise a calibration target mechanism for providing a calibration target for the radiation receiving means. The calibration target mechanism may be arranged to move a calibration target into the field of view of the radiation receiving means and/or may be arranged to provide a calibration target during operation of the apparatus.

Means may be provided for calibrating the apparatus both on start-up and during operation. The calibration means may employ compensation representing a dark output from the spectrometer and an output from a reference target.

The determining means may employ a Gaussian weighted function in order to reduce the effects of noise.

The determining means may employ a weighting factor in its determination function. The weighting factor may be employed to emphasise features that do not change between samples of the same tablet type.

The apparatus may be arranged so that a product of unknown characterstic can be fed through it and the characteristics of the product determined and used in future verification. If the apparatus is arranged in this way, it may also be arranged such that it provides an indication to the user of any additional special checking step that may be required if the new product is of similar composition to previously tested products.

A corresponding method is also provided.

The invention is capable of real time verification of 100% of the product.

The invention employs Near Infra-Red (NIR) to verify the composition of tablets and capsules before they are filled into bottles. This invention can therefore be used, for example, in combination with known fillers on known packaging lines.

The Near Infra-red Spectroscopy employed is based on the principle that certain molecules absorb radiation in the near infra-red wavelength region. The amount of absorption is dependent on the molecule type and its concentration. This phenomenon may be used to distinguish tablets/capsules even when they appear visually identical.

One example of the present invention will now be described with reference to the accompanying drawings, in which:

Figure 1 is a schematic block diagram of an apparatus according to the present invention;
Figure 2 is a diagram showing an illuminating means for use in the apparatus of the present invention;
Figure 3 is a schematic diagram of a radiation receiving means for use in the present invention;
Figure 4 is a diagram showing a calibration mechanism, for calibrating an apparatus of the invention;

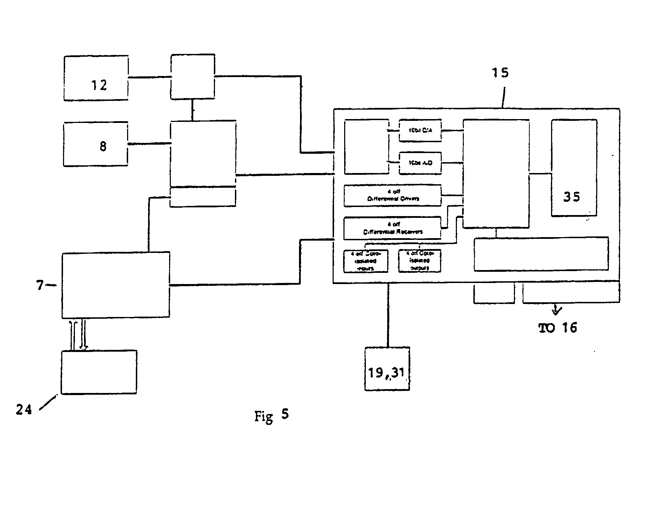

Figure 5 is a schematic block diagram showing control circuitry that may be employed with the present invention;
Figure 6 is a timing diagram showing the control sequence of the apparatus of the invention; and
Figure 7 is a schematic diagram showing a spectrometer that may be employed with the invention.

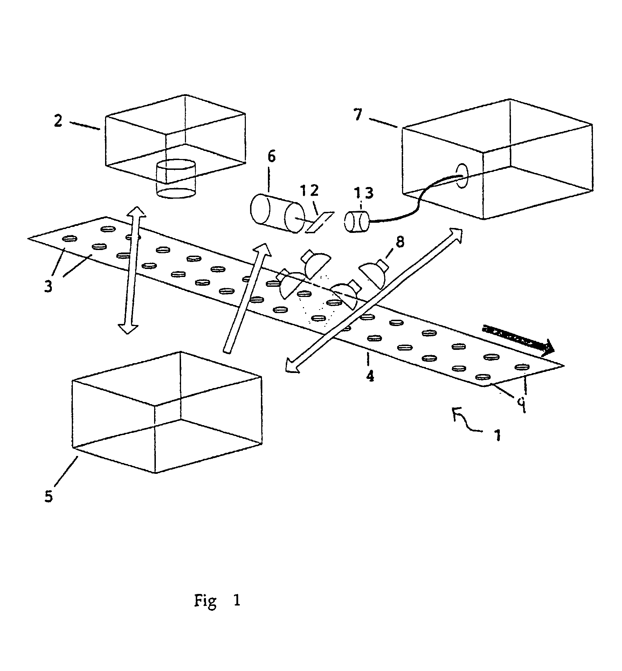

Referring to Figure 1, an apparatus 1 according to the invention is shown. This apparatus is employed in combination with a known vision system 2 which detects the location of product 3 passing along a moving conveyor 4.

In use tablets/capsules 3 are fed from a hopper (not shown) onto the conveyor 4 in two lines 9 by vibratory feeder stages. They pass beneath the vision system 2 where they are checked for size, shape and colour. Positional data is also acquired so that the apparatus 1 can be directed to acquire spectra from the tablets/capsules. Product position data is provided from the vision system 2 to control circuitry 5, which may comprise a combination of a PC and customised electronics, as described below. The control circuitry 5 controls radiation receiving means 6 and a spectrometer 7. It may also, optionally, control illuminating means 8.

The position information and the known speed of the conveyor 4 allow the control circuitry 5 to calculate the position the radiation receiving means 6 must be moved to in order to collect radiation from each product as it passes a detection point.

The radiation receiving means 6 collects radiation from each tablet/capsule of product and focuses it onto the optical fibre input of a spectrometer 7. The spectrometer 7 splits the radiation into a number of wavelengths which are detected by a photodiode array (not shown). The current from each photodiode is integrated for a preset period and then converted into a digital signal by an A/D converter. This data is transmitted over a high speed serial link back to the control circuit 5. The spectrum is then processed by the control circuit 5 and compared with the 'model' spectra for the type and dosage level of the tablet or capsule expected. If the similarity is within preset limits then the tablet will be accepted, otherwise it will be rejected.

There are several constraints on the apparatus 1 of the invention due to the filler design and through-put requirements with which it may be operated. These are that: fill rate can be up to 750 tablets per minute per channel; conveyor belt speed can be in the region of 200mm/s; two streams per channel may be provided; stream centre lines can be in the region of 28mm apart; tablets may be up to +/-6mm from a centre line; tablets in the two streams may be coincident; smallest tablets/capsules are approximately 5mm in diameter, and tablets may touch, giving a minimum tablet separation of 25ms worst case; tablets/capsules can vary in size from approx. 5mm diameter, 3mm thick to 20mm diameter, 6mm thick; tablets may be in any orientation; if tablets are embossed or engraved on one side only, either the marked or clear side may be uppermost. A channel is usually considered to comprise a conveyor, inspection system and verification system.

Furthermore, there should be little or no adjustment required to the apparatus 1 when changing over from one tablet type to another. The apparatus 1 should be self-calibrating and not require a spectrometry 'expert' to set up the system for a new tablet type.

The apparatus 1 should be sensitive to distinguish between a very high percentage of different tablet types and between a high percentage of tablet concentration levels. As actual sensitivities will vary from tablet to tablet, and cannot be predicted for tablets not actually analysed, the sensitivity limits must be determined empirically and can only be defined for particular tablets and concentration levels.

Data processing should be algorithmic in order to aid validation of the process for Federal Drug Administration (FDA) approval of the apparatus 1.

The apparatus 1 has a number of environmental factors with which it should be able to cope. For example, operating temperature should preferably be in the range 10 to 30°C ambient. A cooling system (not shown) may be provided so that the local temperature ambient within the optics and electronics enclosures does not exceed 10°C above ambient (max. 40°C).

The radiation receiving means 6 should be decoupled from any sources of vibration on any filler used in combination with the apparatus, and bright external radiation should preferably be excluded from the scanning area.

The apparatus 1 should ideally not require (manual) re-calibration within the specified operating limits or after cleaning operations.

OPTICAL SET-UP

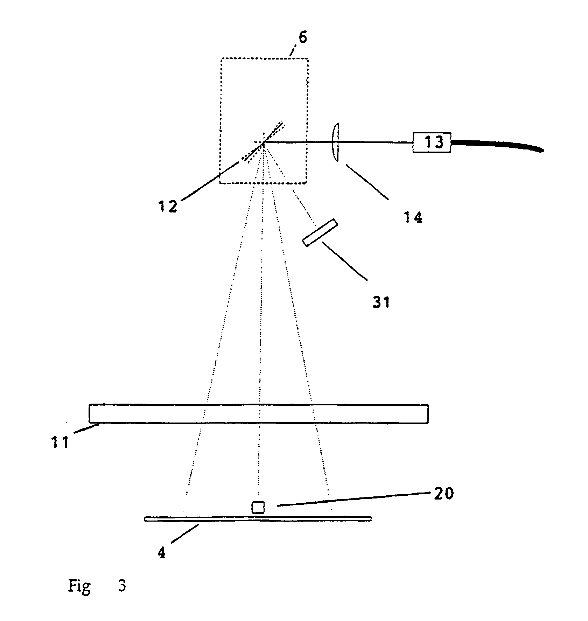

The radiation receiving means 6, shown in detail in Figure 3 is designed so that the intensity of reflected near infra-red radiation is sufficient to allow the short detector integration times required typically 4ms, and arranged so that incident and reflected radiation is as far as possible independent of product tablet 3 position and orientation on the conveyor belt 4. As the conveyor belt 4 on which the tablets 3 lie may be contaminated with tablet dust and tablets 3 may be close together, radiation must be collected only from one tablet surface at any one time. To enable this a beam steering mechanism 12 is positioned using the tablet positional data obtained from the upstream vision system 2 so as to collect radiation from the tablet surface 3 only.

A window 11 protects the optical assembly from contamination and allows easy cleaning of the system.

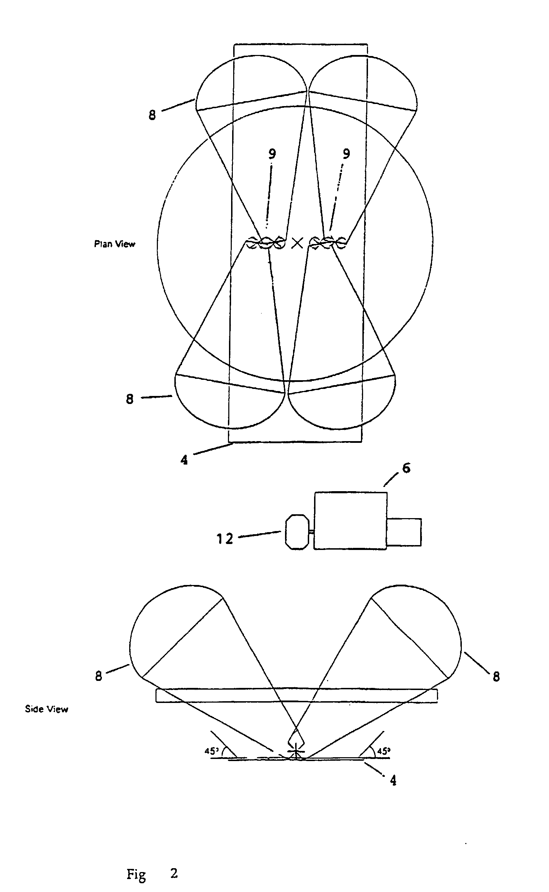

An example configuration, shown in Figure 2, consists of 4 tungsten halogen lamps with metal reflectors to direct a high level of radiation in the NIR region towards the sampling position. Two lamps 8 are directed at each product line 9 from an angle of 45°. This method gives a variability in illumination intensity of approx. 10% over the variation in tablet position across the belt of each stream. This variability is measured on start-up of the apparatus and calibrated in software in control circuitry 5.

Radiation from a 2mm diameter spot, collected as near as possible normal to the tablet surface has been found to be an ideal area of radiation collection for this application. This ensures that radiation is collected only from the tablet (even for the smallest tablets) 3 and reduces the tablet and capsule surface curvature effects that would be more problematic for a larger collection area. The 2mm diameter spot is still large enough however to lessen the variances in spectra reflected from the surface due to embossing on the tablet. Specular reflection is reduced by mounting the radiation sources 8 at 45° to the tablet surface.

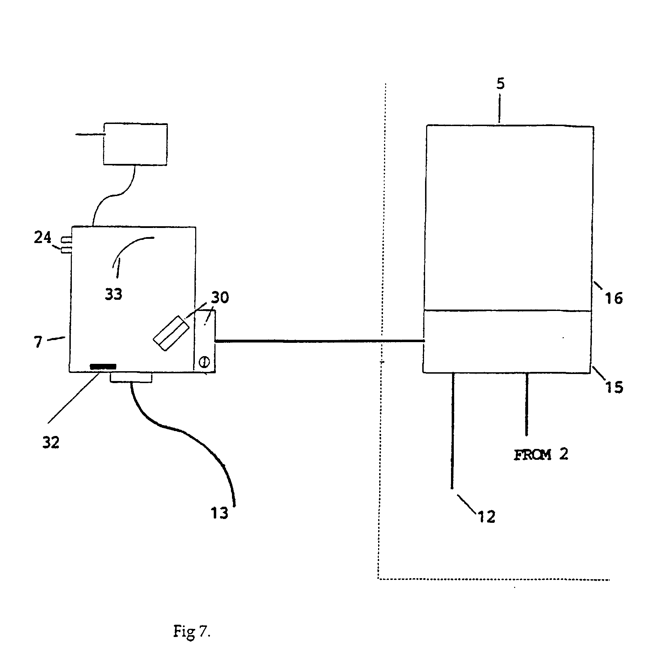

The collected radiation is focused by a lens 14 onto a 400µm fibre optic cable 13 which then couples the radiation into the spectrometer 7. Care is taken to ensure the numerical apertures are matched throughout the system. The spectrometer 7 employs a holographic grating 33 to split received radiation and direct it to a photo-diode array 30 (Figure 7).

An AlSiO$_2$ coated galvo-mirror 12 with a 10mm usable diameter aperture is used to direct radiation from tablets 3 at various positions across the conveyor belt 4.

To achieve the required sensitivity the 2mm spot must be positioned on the centre of the tablet with an accuracy of better than, in this example, 0.7mm in the X and Y directions.

The consistency of spectra from tablets 3 at different points across the belt 4, from different spectrometers 7 and over extended times periods with varying environmental conditions is of utmost importance.

CALIBRATION

To achieve this either acquisition conditions must be identical and stay constant, or any variations must be calibrated out. The apparatus is designed to minimise the variations between product streams and spectrometers 7 but small (yet significant) variations will still be present which may also vary with time. To ensure the best quality spectra each channel will perform an initial set-up calibration at power on then periodically re-calibrate itself as the machine is running.

The calibrations are required for positional accuracy, variability in spectrometer characteristics, and variations in reflected radiation levels.

Initial set-up is done manually and is only required on assembly of each channel or if a component is moved or replaced. Calibration is required for each stream.

Positional set-up is performed by placing a set-up calibration target (not shown) on the conveyor 4 underneath the vision system 2 and apparatus. The set-up calibration target should be parallel to the direction of tablet movement. Calibration marks on the set-up target represent tablet positions for the two streams about each centre line. The calibration marks are located by the vision system. The NIR system is adjusted so that radiation is collected from the correct position downstream of each of the calibration marks. This creates a calibration file relating vision system calibration mark position to galvo-mirror angle.

The set-up calibration target has a height of, in this example, approx. 4.5mm above the belt surface. This is the median of tablet heights. Variations in tablet scan position due to changes in tablet height are small enough so that re-calibration is not required for each different tablet. Any variations that do occur are consistent for a particular tablet type and height.

On power-up or channel reset the apparatus 1 checks that the radiation from a run calibration target 20 is within preset tolerances over the range of tablet positions across the belt. This ensures that all lamps 8 are functional and that the radiation reading means 6 is not contaminated. A run calibration target 20 with a standard reflectivity may be used to ensure measurements are calibrated to the same standard even across different lines or spectrometers 7. The radiation reading means 6 and spectrometer 7, together with any control circuitry should are encased in this example to NEMA12 standard (approximate to IP62) to prevent dust contamination.

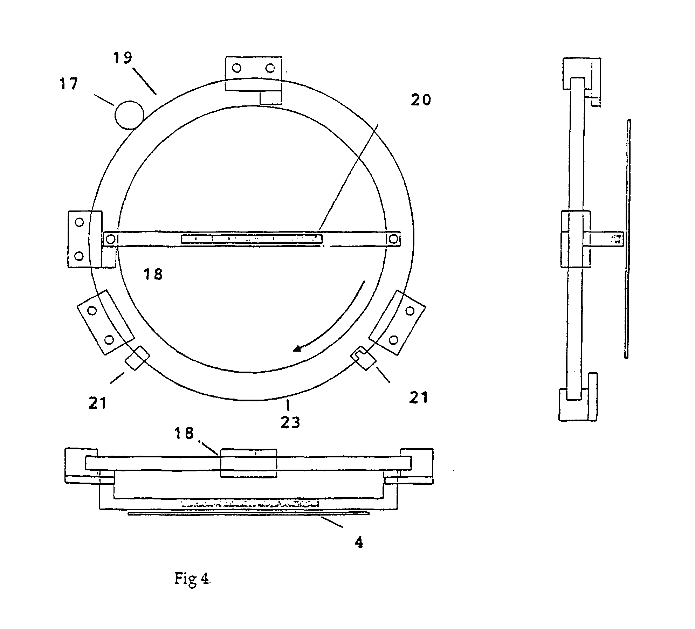

The run calibration target mechanism 19 is shown in Figure 4. In a 'run' mode the reference target 20 is rotated through 90° by motor 17 to allow tablets to pass either side of a central bar 18. As well as supporting the reference target 20 the bar 18 also acts as a physical separator between the two product lines. When a power up/system reset calibration is carried out the target 20 is rotated back across the belt 4 (once the belt has been cleared of tablets/capsules) allowing the galvo-mirror 12 to scan the length of the target. Position sensors 21 confirm that the target 20 has fully rotated. In the 'run' position the central portion of the calibration target 20 is still within the field of view of the galvo-mirror 12. This allows periodic re-calibration of the spectrometer 7 'on the fly' without rotating the reference target 20 and clearing the conveyor 4.

A 'flat field' calibration is carried out to compensate for variances in illumination/reflection intensity (at each of the sampled wavelengths) over the range of possible tablet/capsule sample positions.

The galvo-mirror 12 acquires spectra over the 'field of view' for each line at regular steps. The dark current is also measured before each scan. The intensity at each wavelength and each position is normalised giving a set of gain and offset correction values. The gain and offset corrections are applied to the raw spectra acquired in subsequent tablet/capsule scans. Linear interpolation is used to determine the corrections for positions between the sample points.

Periodic calibration compensates for variances in the spectrometer response over time. Whenever there is a gap of greater than 14ms between target acquisition times the apparatus 1 calibrates itself.

There are two stages to this re-calibration:

1. The galvo-mirror 12 moves to its 'dark scan' position where no radiation is collected by direction towards a target 31 (Figure 3). A spectrum is acquired to give the dark current for each spectrometer photodiode 30 (Figure 7).
2. The galvo-mirror 12 moves to collect radiation from the reference target 20. A spectrum is acquired and the gain and offset pairs adjusted so that the spectrometer response is normalised.

For periodic calibration the gain and offset pairs for each wavelength are globally adjusted for each of the scan positions across the conveyor 4.

A NIR control/interface card 15 is mounted in one of the PCI interface slots in a control PC 16 to provide control circuitry 5. All data processing is carried out by the PC 16, only the lowest level control and interface functions are performed by the NIR card 15.

All programmable devices are arranged to allow programming in situ.

The galvo-mirror 12 is required to drive a 10mm usable aperture $AlSiO_2$ mirror to direct the reflected beam. From the optics geometry in this example the mirror is required to scan over a 40mm line corresponding to a 23 optical (11.5 mechanical) swing in under 3ms. A 10 bit D/A converter 31 output to the servo controller gives a positioning accuracy of approx. +/-0.1mm, which is better than the positioning accuracy required. The position feedback signal from a servo controller to the NIR control card 15 confirms the position of the mirror.

To direct the galvo-mirror 12 to the 'dark scan' target an additional 40° of movement is required, giving an total excursion of approx. 63° optical (31.5° mechanical).

Whenever the conveyor 4 is stopped (due to a filler Emergency stop for instance) the power to the radiation source is removed to avoid possible heat damage to either the conveyor belt 4 or tablets/capsules 3 from prolonged exposure.

The calibration target 20 is moved using as small DC motor 17 with a friction drive to a target wheel 23. Through beam optical sensors confirm position.

The apparatus 1 verifies product integrity in a manner now to be described. Generally, only one type of product is present on each channel of the filler at any one time, therefore it is not necessary to identify each tablet/capsule of product only to verify that it is of the expected type and concentration on that channel at that time.

DATA ANALYSIS

The sequence of analysis operations is detailed below:

For calibration correction, raw spectrum data from the spectrometer 7 giving the reflected radiation intensities at intervals (eg. 3.8nm) are calibration corrected to give a 'standard' value independent of the spectrometer 7 and radiation receiving means 6 characteristics, using the algorithm:

$$Ical_n = \frac{Iraw_n - Idark_n}{IRef_{n,pos}}$$

where

$n$ = wavelength number (0 to 255 corresponding to 1.2 to 2.2µm)
$Ical_n$ = calibrated intensity
$Iraw_n$ = raw intensity value
$Idark_n$ = intensity due to diode dark current
$Iref_{n,pos}$ = intensity of reference target, interpolated from values obtained over range of tablet positions during calibration

The calibrated intensities are then smoothed using a Gaussian weighted function to reduce the effects of noise, using:

$$Ismoothed_n = \frac{100 \times Ical_n + 120 \times (Ical_n-1 + Ical_{n+1}) + 40 \times (Ical_{n-2} + Ical_{n+2}) + 20 \times (Ical_{n-3} + Ical_{n+3})}{280}$$

The data is then auto-scaled (mean centred over the range of wavelengths and scaled so that the variance of the scaled data is equal to 1, with a data range of +/-1) using:

$$Iscaled_n = \frac{Ismoothed_n - \overline{Ismoothed}}{[\sum_n (Ismoothed_n - \overline{Ismoothed})^2]^{1/2}}$$

This reduces the effects of different intensity values due to tablet orientation etc.
The 1st derivative of the data is taken to highlight differences in the slope and position of spectral features between different samples, using:

$$Ideriv_n = \frac{\delta \, Iscaled_n}{\delta n}$$

If the filler is in 'learn' mode (see below) the spectra for a number of tablets/capsules are acquired. The master model is created for that tablet/capsule type from the mean spectrum of the data, using:
where

$$Model_n = \frac{\sum_s Ideriv_{s,n}}{S}$$

$s$ = Range variable for all spectra acquired
$S$ = Number of spectra

As some spectral features vary between samples of the same tablet/capsule type (due to varying water content among other factors), a weighting factor is derived that gives more emphasis to features that do not change between samples of the same tablet/capsule type. This increases the resolving power of the apparatus 1 to distinguish between tablets that are very similar.
The weighting factor is derived from the standard deviation of the distance between the intensity values and the master model intensity at each wavelength, using:

$$DistModel_{s,n}=Ideriv_{s,n}-Model_n$$

$$SDModel_n=\sqrt{\frac{\sum_s (DistModel_{s,n}-\overline{DistModel})^2}{S}}$$

$$WF_n=SDModel_N^3$$

The Euclidean distance of each sample within the model data from the model is calculated, with the weighting factor applied. The mean of this value is then used to determine the standard deviation for the model i.e. determine the distribution of distance measurements in the model sample set about the mean model spectrum. A normal distribution is assumed, using:

$$EuclidDistModel_s=\sqrt{\sum_n \frac{(DistModel_n)^2}{WF_n}}$$

$$SDModel=\sqrt{\frac{\sum_s (EuclidDistModel_s-\overline{EuclidDistModel})^2}{S}}$$

The number of samples required may be varied to enable an acceptable model standard deviation to be obtained.

The mean Euclidean distance for the model is expressed as a difference value in terms of the model standard deviation, by:

$$ModelDifferenceMean=\frac{\overline{EuclidDistModel}}{SDModel}$$

In 'run' mode the derived spectrum for each tablet/capsule sampled is compared against a master model spectrum.

The Euclidean distance between the derived intensity at each wavelength and the corresponding intensity for the model is calculated, with the weighting factor at each wavelength applied, with:

$$SampleDist=\sqrt{\sum_n \frac{(Ideriv_n-Model_n)^2}{WF_n}}$$

The 'difference' value is calculated in a difference calculation from the distance values scaled in terms of the Model standard deviation by:

$$SampleDifference=\frac{SampleDist}{SDModel}$$

A limit is set that is a number of standard deviations from the Model difference value.

$$Accept\ Limit = Model\ Difference\ Mean + LimitSD \times ModelSD,$$

where *LimitSD* is the number of standard deviations away from the model difference mean that a sample difference value will be accepted as being the same as the same tablet/capsule type as the model. (A value for LimitSD of 3 gives a 99.7% probability based on the model data set).

*Sample Difference > Accept Limit*     Reject tablet/capsule on NIR criteria

*Sample Difference ≤ Accept Limit*     Accept tablet/capsule on NIR criteria

When the apparatus is implemented as part of a filler system the size, shape and colour checks are used in addition to the apparatus analysis to determine the validity of each tablet/capsule on the lines 9.

SOFTWARE

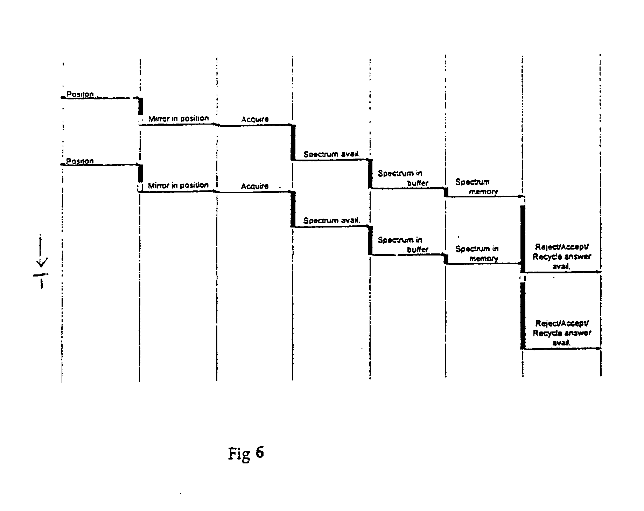

The diagram of Figure 6 gives the timing requirements for the worst case situation where two tablets are coincident at the sampling position. The PC/NIR control systems must acquire data and transfer data to a PC buffer memory 35 at this rate (i.e. within 7ms for a complete cycle). Processing of spectra can be done at a lower rate, within 12.5ms, assuming a maximum 'burst' rate for a channel of 80 tablets per second.
Transfer of spectrum data (256 x 16 bit words) to PC memory is carried out using Direct Memory Access (DMA) to avoid an unacceptable processor burden.
The software requirement for the apparatus 1 is split into two parts. The low level control of the Spectrometer 7 and NIR card 15 can be implemented using a Windows NT kernel device driver, for example, to achieve the low level control and timing requirements. The higher level sequencing and data processing is implemented using a user level Windows NT thread, for example.
Various functions are provided by a device driver for the set-up and operation of the NIR card 15.
Each tablet/capsule 3 identified by the vision system 2 is added to a list of targets for the apparatus 1. Each target has associated with it:

| | |
|---|---|
| TargetID | This identifies the target |
| TargetPosition | The angular position of the galvo-mirror 12 to collect the reflected radiation from that tablet, which is derived from the pixel position of the centre of gravity of the tablet determined by the vision system. |
| NIRSampleTime | The time in ms that the NIR acquisition sequence should start. This is derived from the time that vision system acquired the image of the target centre of gravity plus the time taken for the tablet to move along the conveyor from the vision system to the NIR acquisition point. If the centre of gravity of two targets are less than 7ms apart the NIRSampleTime is adjusted so that one target is sampled slightly early and the other slightly late. In the worst case this gives a mis-position of 0.7mm. |
| PCBufferAddress | The address of the buffer in PC memory where the NIR spectrum should be placed. |

The parameter AcquisitionType determines the sample type to be made, with 0 - Normal scan, 1 - Dark scan. In dark scan mode the spectrum is acquired with the spectrometer shutter 32 closed. Note that this mode is only used during initial set-up and testing. Periodic calibrations with the associated filler operating direct the galvo-mirror 12 to the dark-scan target and acquire dark current values for the diodes with the shutter open.
In an interrupt routine, called periodically, the current time is compared with the sample time of the next tablet on the list. If they are the same, the NIR_Acquire function is called which passes the tablet ID, TargetPosition and PC Buffer Adddress to the NIR card 15. The NIR card 15 moves the galvo mirror 12 to the required position and a short period (eg. 3ms) later triggers the spectrometer 7 to start acquiring the spectrum. After the integration time the spectrometer 7 sends its data over a high speed serial link to a buffer memory on the NIR card 15. The data is then transferred using DMA access to the PC 16. The NIR card 15 raises an interrupt on completion of this transfer.
An Interrupt Handler routine is called on completion of the transfer an NIR spectrum to PC memory. It resets the interrupt request on the NIR card 15 and informs the NIR user level thread on the PC that data is available to be processed.
A user level Windows NT thread provides the interface to the rest of the system, coordinates the higher level control of the apparatus 1 and implements the processing of the raw data to determine whether a particular tablet should be accepted, rejected or re-cycled. It also provides the functions for on-line calibration and 'learn/verify' mode operation.

The external functions provided include: performance of processing on the specified spectrum data as detailed above. This function returns a value to indicate whether the target was accepted or rejected. If the apparatus 1 was unable to scan or analyse the target for any reason the function returns a 'don't know' value. The reason is also communicated to the channel control functions so that appropriate action may be taken.

Other functions include creating a new NIR master model, adding the most recently acquired spectrum to the model data set, allowing model acceptance limits etc. to be altered, getting an existing NIR model from the database, storing a new or modified master model in the database, causing an re-calibration sequence. The parameter 'type' selects either power on/system reset or periodic re-calibration.

A Calibrate Request function requests the channel controller to halt the passage of tablets/capsules 3 onto the conveyor belt 4, so that a 'gap' is created so that an on-line calibration sequence may take place. This function is only called if the targets on the belt are so tightly spaced that there have been no breaks between scans long enough to perform a calibration scan within a preset period.

Several functions are required for development and testing but are not used during the normal operation and calibration of the filler. The functions include: display of spectrum for specified sample (reference scan, dark scan or tablet/capsule scan) in 'real time'; processing stages may be individually enabled and disabled and/or stepped through; display of spectrum for specified model in 'real time'; dumping of spectrum data (at various stages of processing) for later off-line analysis; and logging of data/messages to a log file for debugging purposes.

OPERATION

The apparatus of the invention has various operating functions, which are set out below.

A master model for each tablet/capsule type is stored on a database. This model includes attributes of the tablet such as name, dosage, size, shape, colour as well as the NIR model.

The NIR master model defines the NIR spectrum characteristics of a particular tablet/capsule 3.

When a different tablet/capsule 3 is loaded onto the filler machine the operator is required to select the master model for that tablet/capsule from a selection menu.

If the tablet/capsule is of a new type not run on the filler before, the operator selects 'new tablet/capsule' and enters information on name, dosage etc.

The filler then transitions to either a 'verify mode' where the tablet loaded is compared with the master model in the case of a known tablet/capsule, or 'learn mode' where a new master model is created in the case of a new tablet/capsule.

When a tablet/capsule type is changed and a master model does not exist, a number of tablets/capsules are run through the system to create a new master model. The 'mean' spectrum of these tablets is used to create the model. This new model is compared against all previous master models stored on the apparatus to check that the new tablet/capsule type can be reliably distinguished from all existing master models. In the small minority of cases where tablets/capsules cannot be distinguished (see below), special operating procedures may independently confirm the identity of the tablet loaded into the filler.

After creation of the model the filler runs through the master model confirmation stage before allowing the operator to fill bottles in a 'run mode'.

The number of tablets required to create/confirm the model is dependent on the variability in the spectra acquired, but is typically a few hundred tablets. These tablets are re-cycled to the hopper.

The apparatus can be employed to verify product on plural groups of channels of a filler.. Each channel of the filler is calibrated to the same standard, so the master model is independent of the line 9 used to acquire the spectra.

When a tablet/capsule type is changed and a master model already exists, a number of tablets/capsules are run through the apparatus. The 'mean' spectrum of these tablets/capsules is compared with the master model and if the difference values are within acceptable limits the tablet/capsule is accepted and the filler may be used to fill bottles in 'run mode'. If the difference is outside the limits the operator is informed that the wrong type of tablet may have been loaded.

The number of tablets required for confirmation is dependent on the variability in the spectra acquired, but is typically a few hundred tablets. These tablets are re-cycled to the hopper.

Once the identity of the tablets/capsules loaded into the filler has been confirmed, the operator may select a 'run mode'. The sequence of operations is automatic and requires no further operator interaction (apart from responding to alarms, refilling a hopper and emptying the reject bin).

Each tablet/capsule that has passed the size, shape and colour quality checks performed by the vision system is sampled by the spectrometer 7 and its spectrum compared with the master model. If the difference value between the sample and the master model is within preset confidence limits it is accepted and directed to the appropriate bottle to be filled.

If the spectrum of the tablet/capsule is outside the limits (or the size, shape and colour verification failed) the tablet/capsule is directed to a reject bin and a message logged.

Any large variations in reflected radiation intensity will be flagged to the operator as a possible fault on the system. This includes failure of one or more lamps 5, failure of the spectrometer 7, or dirt build up on the optical window 11.

Set-up of the radiation receiving means 6 is only required on initial commissioning or after a component replacement. This is a manual operation carried out by a technician using test equipment and restricted access maintenance screens. A monitor screen, keyboard and mouse are connected local to the channel control PC 16 for these operations.

The apparatus 1 should reliably accept the tablets/capsules of the expected type and dosage concentrations and reject all others, other than in the exceptional cases detailed below:

Exception A: It is accepted that in a small minority of cases where NIR signatures are weak and dosage levels are low, the apparatus may not be able to reliably distinguish between tablets/capsules of low concentration levels of the same active component. These exceptions will be recorded.

Exception B: In some cases tablets/capsules of different dosage levels of the same active component type may have the same concentration level per unit volume. The apparatus will not distinguish between these tablets/capsules, but as different dosages must be of a different size, the visual inspection system can distinguish between them.

Exception B should never occur as in the filler implementation the NIR verification is only required where the (rogue) tablets are of the same size, shape and colour as the expected type.

When a new master model is created for a new tablet/capsule type the newly created model is compared with all the previously created master models for other tablets/capsules. The 'difference' between the new model and the existing model is calculated for each case. Whenever the new model is inside the acceptance limit for an existing model (as is likely for exception A above) or the existing model is within the acceptance limits of the new model these similarities are recorded and highlighted to the operator. Thus a log is kept of small minority of cases where tablet/capsule types cannot be reliably distinguished. In these cases special operating procedures may be put in place to ensure that the tablets/capsules loaded onto the filler are verified using alternative off-line techniques.

The performance of the apparatus 1 is checked both during a power-up/system reset and automatically as the system is running. These checks/re-calibrations compensate for gradual variations in spectrometer performance and system failures. Virtually all mechanical, electrical or optical failures are detected either during the calibration process or cause a fail to safety where the acquired spectrum is outside the acceptance limits and tablets/capsules are directed to the reject bin. It is therefore extremely unlikely that a failure could give rise to a false accept of tablets.

## Claims

1. A system for verifying the composition of a moving product (3), comprising an apparatus (1) which comprises:

   a source (8) of near infra-red radiation for illuminating the product (3);

   control circuitry (5) arranged to receive data relating to the location of the product (3) and to use said data to control a radiation receiving means (6) to receive radiation reflected by the product (3);

   a spectrometer (7) for receiving the radiation from the radiation receiving means (6) and providing an output corresponding to the intensity of the received radiation at a number of different wavelengths; and

   means (16) for determining whether or not the product (3) is within predetermined integrity criteria on the basis of the spectrometer output,

   **characterised in that**
   the system further comprises a vision system (2) located upstream from the apparatus (1), said vision system providing the product location data.

2. A system according to claim 1, wherein the radiation receiving means (6) comprises a galvo-mirror (12), the position of which is altered dependent upon received location data in order to target a located product (3).

3. A system according to claim 1 or 2, wherein the spectrometer (7) comprises means (33) for splitting received radiation into a number of wavelengths for detection by a photo-diode array (30).

4. A system according to any of the preceding claims, wherein the system is controlled by a control PC (16) via a dedicated interface card (15).

5. A system according to any of the preceding claims, wherein the apparatus (1) further comprises a calibration target mechanism (19) for providing a calibration target (20) for the radiation receiving means (6).

6. A system according to claim 5, wherein the calibration target mechanism (19) is arranged to move a calibration target (20) into the field of view of the radiation receiving means (6) and/or is arranged to provide a calibration target (20) during operation of the apparatus (1).

7. A system according to any of the preceding claims, wherein the determining means employs a Gaussian weighted function.

8. A system according to any of the preceding claims, wherein calibration means are provided for calibrating the apparatus (1) both on start-up and during operation.

9. A system according to claim 8, wherein the calibration means employs compensation representing a dark output from the spectrometer (7) and an output from a reference target.

10. A system according to any of the preceding claims, wherein the determining means employs a weighting factor in its determination function.

11. A system according to claim 10, wherein the weighting factor is employed to emphasise features that do not change between samples of the same product type.

12. A system according to any of the preceding claims, arranged so that a product (3) of unknown characteristic can be fed through it and the characteristics of the product determined and used in future verification.

13. A system according to claim 12, arranged such that it provides an indication if the unknown product (3) is of similar composition to previously tested products.

14. A system according to any of the preceding claims for verifying the composition of products moving in at least one line (9), wherein the illuminating source (8) comprises two lamps for each line (9) of product to be tested, each lamp being directed at the line (9) at an angle of approximately 45°.

15. A system according to any of the preceding claims for verifying the composition of products moving in at least one line (9), wherein the apparatus (1) is arranged to verify the quality of plural lines (9) of product at the same time.

16. A method for verifying the composition of a moving product (3), the method comprising the steps of:

   illuminating the product (3) with a source (8) of near infra-red radiation;

   receiving data relating to the location of the product and using said data to control a radiation receiving means (6) to receive radiation reflected by the product (3);

   receiving radiation reflected by the product (3) and providing an output corresponding to the intensity of the received radiation at a number of different wavelengths; and

   determining whether or not the product (3) is within predetermined integrity criteria on the basis of the output,

   **characterised in that**
   the method further comprises the step of providing the product location data by a vision system (2).

**17.** A method according to claim 16, employing a galvo-mirror (12), the position of which is altered dependent upon received location data in order to target a located product (3).

**18.** A method according to claim 16 or 17, wherein the determining step employs a Gaussian weighted function.

**19.** A method according to any of claims 16 to 18, further comprising a calibration step on start-up or during operation.

**20.** A method according to claim 19, wherein the calibration employs compensation representing a dark output and an output from a reference target.

**21.** A method according to any of claims 16 to 20, wherein the determining step employs a weighting factor in its determination.

**22.** A method according to claim 21, wherein the weighting factor is employed to emphasise features that do not change between samples of the same product type.

**23.** A method according to any of claims 16 to 22 for verifying the composition of products (3) moving in at least one line (9), wherein the method verifies the quality of two lines (9) of product at the same time.

**Patentansprüche**

**1.** System zum Verifizieren der Zusammensetzung eines sich bewegenden Produkts (3), mit einer Vorrichtung (1), die umfaßt:

eine Strahlungsquelle (8) im nahen Infrarotbereich zum Bestrahlen des Produkts (3);

Steuerschaltkreise (5), die angeordnet sind, um Daten betreffend die Position des Produkts (3) zu empfangen und um die Daten zur Steuerung einer Strahlungsempfangsvorrichtung (6) zu verwenden, um so Strahlung zu empfangen, die durch das Produkt (3) reflektiert wird;

ein Spektrometer (7) zum Empfangen der Strahlung von der Strahlungsempfangsvorrichtung (6) und zum Bereitstellen eines Ausgangssignals entsprechend der Intensität der empfangenen Strahlung bei einer Anzahl unterschiedlicher Wellenlängen; und

eine Vorrichtung (16) zur Bestimmung, ob sich das Produkt (3) innerhalb vorbestimmter Integritätskriterien auf der Basis des Spektrometerausgangssignals befindet oder nicht,

**dadurch gekennzeichnet, daß**
das System weiterhin ein Bildsystem (2) aufweist, welches sich stromaufwärts von der Vorrichtung (1) befindet und die Produktpositionsdaten liefert.

**2.** System nach Anspruch 1, wobei die Strahlungsempfangsvorrichtung (6) ein Spiegelgalvanometer (12) aufweist, dessen Position in Abhängigkeit von den empfangenen Positionsdaten verändert wird, um auf ein lokalisiertes Produkt (3) zu zielen.

**3.** System nach Anspruch 1 oder 2, wobei das Spektrometer (7) eine Vorrichtung (33) zum Aufsplitten der empfangenen Strahlung in eine Anzahl von Wellenlängen zur Detektion durch ein Photodiodenarray (30) aufweist.

**4.** System nach einem der vorangehenden Ansprüche, wobei das System durch einen Steuerungs-PC (16) über eine Schnittstellenkarte (15) gesteuert wird.

**5.** System nach einem der vorangehenden Ansprüche, wobei die Vorrichtung (1) weiterhin einen Kalibriertargetmechanismus (19) zum Bereitstellen eines Kalibriertargets (20) für die Strahlungsempfangsvorrichtung (6) aufweist.

**6.** System nach Anspruch 5, wobei der Kalibriertargetmechanismus (19) angeordnet ist, um ein Kalibriertarget (20) in den Sichtbereich der Strahlungsempfangsvorrichtung (6) zu bewegen und/oder angeordnet ist, um ein Kalibriertarget (20) während des Betriebs der Vorrichtung (1) bereitzustellen.

**7.** System nach einem der vorangehenden Ansprüche, wobei die Bestimmungsvorrichtung eine gewichtete Gauß-Funktion verwendet.

**8.** System nach einem der vorangehenden Ansprüche, wobei die Kalibriervorrichtung vorgesehen ist, um die Vorrichtung (1) sowohl zu Beginn als auch während des Betriebs zu kalibrieren.

**9.** System nach Anspruch 8, wobei die Kalibriervorrichtung einen Ausgleich verwendet, der ein dunkles Ausgangssignal des Spektrometers (7) und ein Ausgangssignal eines Referenztargets einbezieht.

**10.** System nach einem der vorangehenden Ansprüche, wobei die Bestimmungsvorrichtung einen Gewichtungsfaktor in ihrer Bestimmungsfunktion verwendet.

**11.** System nach Anspruch 10, wobei der Gewichtungsfaktor verwendet wird, um Merkmale zu verstärken, die sich zwischen Proben des gleichen Produkttyps nicht verändern.

**12.** System nach einem der vorangehenden Ansprüche, so angeordnet, daß ein Produkt (3) mit unbekannter Charakteristik hindurchgeführt werden kann, und die Charakteristika des Produkts bestimmt und beim zukünftigen Verifizieren verwendet werden können.

**13.** System nach Anspruch 12, so angeordnet, daß es anzeigt, wenn das unbekannte Produkt (3) von ähnlicher Zusammensetzung wie zuvor getestete Produkte ist.

**14.** System nach einem der vorangehenden Ansprüche zum Verifizieren der Zusammensetzung von Produkten, die sich in zumindest einer Reihe (9) bewegen, wobei die Strahlungsquelle (8) zwei Lampen für jede zu testende Reihe (9) von Produkten aufweist, wobei jede Lampe unter einem Winkel von etwa 45° auf die Reihe (9) gerichtet ist.

**15.** System nach einem der vorangehenden Ansprüche zum Verifizieren der Zusammensetzung von Produkten, die sich in zumindest einer Reihe (9) bewegen, wobei die Vorrichtung (1) angeordnet ist, um die Qualität von mehreren Produktreihen (9) gleichzeitig zu verifizieren.

**16.** Verfahren zum Verifizieren der Zusammensetzung eines sich bewegenden Produkts (3) mit folgenden Schritten:

Bestrahlen des Produkts (3) mit einer Strahlungsquelle (8) im nahen Infrarotbereich;

Empfangen von Daten betreffend die Position des Produkts und Verwenden dieser Daten zur Steuerung einer Strahlungsempfangsvorrichtung (6), um so Strahlung zu empfangen, die von dem Produkt (3) reflektiert wird;

Empfangen von Strahlung, die durch das Produkt (3) reflektiert wird, und Bereitstellen eines Ausgangssignals entsprechend der Intensität der empfangenen Strahlung bei einer Anzahl von unterschiedlichen Wellenlängen; und

Bestimmen, ob sich das Produkt (3) innerhalb vorbestimmter Integritätskriterien auf der Basis des Ausgangssignals befindet oder nicht,
dadurch charakterisiert, daß
das Verfahren weiterhin den Schritt aufweist, die Produktpositionsdaten durch ein Bildsystem (2) bereitzustellen.

**17.** Verfahren nach Anspruch 16, mit dem Schritt, ein Spiegelgalvanometer (12) zu verwenden, dessen Position in Abhängigkeit von den empfangenen Positionsdaten verändert wird, um auf ein lokalisiertes Produkt (3) zu zielen.

**18.** Verfahren nach Anspruch 16 oder 17, wobei der Bestimmungsschritt eine gewichtete Gauß-Funktion verwendet.

**19.** Verfahren nach einem der Ansprüche 16 bis 18, desweiteren mit einem Kalibrierschritt zu Beginn oder während des Betriebs.

**20.** Verfahren nach Anspruch 19, wobei die Kalibrierung einen Ausgleich verwendet, der ein dunkles Ausgangssignal und ein Ausgangssignal eines Referenztargets einbezieht.

**21.** Verfahren nach einem der Ansprüche 16 bis 20, wobei der Bestimmungsschritt einen Gewichtungsfaktor bei der Bestimmung verwendet.

**22.** Verfahren nach Anspruch 21, wobei der Gewichtungsfaktor verwendet wird, um Merkmale zu verstärken, die sich zwischen Proben desselben Produkttyps nicht verändern.

**23.** Verfahren nach einem der Ansprüche 16 bis 22 zum Verifizieren der Zusammensetzung von Produkten (3) die sich in zumindest einer Reihe (9) bewegen, wobei das Verfahren die Qualität von zwei Produktreihen (9) gleichzeitig verifiziert.

**Revendications**

**1.** Système pour vérifier la composition d'un produit en mouvement (3) comprenant un appareil (1) qui comprend :

une source (8) de rayonnement infra-rouge proche pour éclairer le produit (3) ;

un ensemble de circuits de commande (5) agencé pour recevoir des données concernant l'emplacement du produit (3) et pour utiliser lesdites données pour commander des moyens de réception de rayonnement (6) pour recevoir un rayonnement réfléchi par le produit (3) ;

un spectromètre (7) pour recevoir le rayonnement provenant des moyens de réception de rayonnement (6) et fournir une sortie correspondant à l'intensité du rayonnement reçu à un certain nombre de longueurs d'onde différentes ; et

des moyens (16) pour déterminer si le produit (3) répond ou non à des critères d'intégrité prédéterminés en se basant sur la sortie du spectromètre,

**caractérisé en ce que**
le système comprend en outre un système de vision (2) situé en amont de l'appareil (1), ledit système de vision fournissant les données d'emplacement de produit.

**2.** Système selon la revendication 1, dans lequel les moyens de réception de rayonnement (6) comprennent un miroir galvanométrique (12), dont la position est modifiée en fonction de données d'emplacement reçues afin de viser un produit localisé (3).

**3.** Système selon la revendication 1 ou la revendication 2, dans lequel le spectromètre (7) comprend des moyens (33) pour diviser le rayonnement reçu en un certain nombre de longueurs d'onde pour la détection par un ensemble de photodiodes (30).

**4.** Système selon l'une quelconque des revendications précédentes, dans lequel le système est commandé par un PC de commande (16) par l'intermédiaire d'une carte réseau dédiée (15).

**5.** Système selon l'une quelconque des revendications précédentes, dans lequel l'appareil (1) comprend en outre un mécanisme de cible d'étalonnage (19) pour fournir une cible d'étalonnage (20) aux moyens de réception de rayonnement (6).

**6.** Système selon la revendication 5, dans lequel le mécanisme de cible d'étalonnage (19) est agencé pour déplacer une cible d'étalonnage (20) dans le champ de vision des moyens de réception de rayonnement (6) et/ou est agencé pour fournir une cible d'étalonnage (20) durant le fonctionnement de l'appareil (1).

**7.** Système selon l'une quelconque des revendications précédentes, dans lequel les moyens de détermination utilisent une fonction pondérée gaussienne.

**8.** Système selon l'une quelconque des revendications précédentes, dans lequel des moyens d'étalonnage sont prévus pour étalonner l'appareil (1) aussi bien au démarrage que durant le fonctionnement.

**9.** Système selon la revendication 8, dans lequel les moyens d'étalonnage utilisent une compensation représentant une sortie noire du spectromètre (7) et une sortie d'une cible de référence.

**10.** Système selon l'une quelconque des revendications précédentes, dans lequel les moyens de détermination utilisent un facteur de pondération pour leur fonction de détermination.

**11.** Système selon la revendication 10, dans lequel le facteur de pondération est utilisé pour mettre en évidence des caractéristiques qui ne changent pas entre des échantillons du même type de produit.

**12.** Système selon l'une quelconque des revendications précédentes, agencé de manière à ce qu'un produit (3) de caractéristique inconnue puisse être amené à travers celui-ci et les caractéristiques du produit déterminées et utilisées lors d'une vérification ultérieure.

**13.** Système selon la revendication 12, agencé de manière à ce qu'il fournisse une indication si le produit inconnu (3) est de composition similaire à des produits testés précédemment.

**14.** Système selon l'une quelconque des revendications précédentes pour vérifier la composition de produits se déplaçant en au moins une ligne (9), dans lequel la source d'éclairement (8) comprend deux lampes pour chaque ligne (9) de produit à tester, chaque lampe étant dirigée vers la ligne (9) à un angle d'environ 45°.

**15.** Système selon l'une quelconque des revendications précédentes pour vérifier la composition de produits se déplaçant en au moins une ligne (9), dans lequel l'appareil (1) est agencé pour vérifier la qualité de plusieurs lignes (9) de produit en même temps.

**16.** Procédé pour vérifier la composition d'un produit en mouvement (3), le procédé comprenant les étapes consistant à :

éclairer le produit (3) avec une source (8) de rayonnement infra-rouge proche ;

recevoir des données concernant l'emplaceme du produit et utiliser lesdites données pour commander des moyens de réception de rayonnement (6) afin de recevoir un rayonnement réfléchi par le produit (3) ;

recevoir un rayonnement réfléchi par le produit (3) et fournir une sortie correspondant à l'intensité du rayonnement reçu à un certain nombre de longueurs d'onde différentes ; et

déterminer si le produit (3) répond ou non à des critères d'intégrité prédéterminés en se basant sur la sortie,

**caractérisé en ce que**
le procédé comprend en outre l'étape consistant à fournir les données d'emplacement de produit par un système de vision (2).

**17.** Procédé selon la revendication 16, utilisant un miroir galvanométrique (12), dont la position est modifiée en fonction de données de rayonnement reçues afin de viser un produit localisé (3).

**18.** Procédé selon la revendication 16 ou la revendication 17, dans lequel l'étape de détermination utilise une fonction pondérée gaussienne.

**19.** Procédé selon l'une quelconque des revendications 16 à 18, comprenant en outre une étape d'étalonnage au démarrage ou durant le fonctionnement.

**20.** Procédé selon la revendication 19, dans lequel l'étalonnage utilise une compensation représentant une sortie noire et une sortie d'une cible de référence.

**21.** Procédé selon l'une quelconque des revendications 16 à 20, dans lequel l'étape de détermination utilise un facteur de pondération pour sa détermination.

**22.** Procédé selon la revendication 21, dans lequel le facteur de pondération est utilisé pour mettre en évidence des caractéristiques qui ne changent pas entre des échantillons du même type de produit.

**23.** Procédé selon l'une quelconque des revendications 16 à 22 pour vérifier la composition de produits (3) se déplaçant en au moins une ligne (9), dans lequel le procédé vérifie la qualité de deux lignes (9) de produit en même temps.

Fig 1

Plan View

Side View

45° 45°

Fig 2

Fig     3

Fig 4

Fig 5

Fig 6

Fig 7.